# EUROPEAN PATENT APPLICATION

(11) **EP 1 785 910 A1**
(43) Date of publication of application: **16.05.2007**
(21) Application number: 06023371.5
(22) Date of filing: 09.11.2006
(51) Int. Cl.: G06F 21/24, H04L 29/06

(54) **Client server system**

(30) Priority: 10.11.2005 JP 2005326131
(71) Applicant: Funai Electric Co., Ltd., Daito-shi, Osaka 574-0013 (JP)
(72) Inventor: Kimura, Akira, Daito-shi, Osaka 574-0013 (JP)
(74) Representative: Grünecker, Kinkeldey, Stockmair & Schwanhäusser Anwaltssozietät

(57) **Abstract**

A client-server system including: a server device including a contents transmitting unit to transmit contents; and a client terminal device which is connected to the server device through a wireless network, including: a content receiving unit to receive the transmitted contents; and an output control unit to output the received contents to an output unit, wherein the server device includes: a storing unit to store connection information to connect the client terminal device to the server device; and a recording control unit to record the connection information stored in the storing unit on the mobile recording medium loaded on the server device, and the client terminal device includes: a connection control unit to connect the client terminal device to the server device based on the connection information recorded on the mobile recording medium, only when the mobile recording medium is loaded on the client terminal device.

## Description

### BACKGROUND OF THE INVENTION

### Field of the Invention

The present invention relates to a client-server system.

### Description of Related Art

A conventional client-server system including a server device and a client terminal device which is connected to the server device through a wireless network such as a wireless LAN (Local Area Network) to communicate with the server device is known. In the server device and the client terminal device of the client server system, for example, connection information including an identifier (SSID (Service set IDentifier) to identify a wireless network or an encryption key to encrypt or decrypt communication data are set. The client terminal device can be connected to the server device only when the connection information set in the client terminal device is matched with connection information set in the server device. On the basis of the connection information, for example, even though the same client-server systems are installed in a first house and a second house adjacent to the first house, the client terminal device installed in the first house is set (grouped or paired) such that the client terminal device is connected to the server device installed in the first house and not connected to the server device installed in the second house.

As a method of setting connection information in a client terminal device, for example, a method in which a user operates a predetermined input device to input connection information in the client terminal device, a method in which the connection information is transmitted from a predetermined device to the client terminal device by wireless LAN communication or infrared communication, and the like are known. However, a method of inputting the connection information is disadvantageously troublesome for a user. Furthermore, in the method of transmitting the connection information, the connection information easily leaks disadvantageously.

A method of loading a mobile recording medium (memory card or the like) on which the connection information is recorded is loaded on the client terminal device and reading the connection information from the mobile recording medium to set the connection information (for example, see Japanese Patent Application Laid-Open No. 2005-191989, Japanese Patent Application Laid-Open No. 2005-184314, Japanese Patent Application Laid-Open No. 2004-96146, and Japanese Patent Application Laid-Open No. 2002-281040) are proposed.

However, according to the methods described in the references, for example, when first connection information is set in a client terminal device, the client terminal device can be always connected to the server device unless the first connection information is changed. For this reason, a safety problem is posed.

### SUMMARY OF THE INVENTION

It is an object of the present invention to provide a client-server system comprising a server device and a client terminal device which can be connected to the server device by a scheme having high security.

In order to attain the above-described object, according to a first aspect of the invention, a client-server system comprises: a server device including a contents transmitting unit to transmit contents; and a client terminal device which is connected to the server device through a wireless network, including: a content receiving unit to receive the contents transmitted by the contents transmitting unit; and an output control unit to output the contents received by the contents receiving unit to an output unit, wherein the client terminal device comprises: a connection control unit to connect the client terminal device to the server device through the wireless network based on connection information recorded on a mobile recording medium on which the connection information to connect the client terminal device to the server device through the wireless network is recorded, only when the mobile recording medium is loaded on the client terminal device; a view restriction information transmitting unit to transmit view restriction information recorded on the mobile recording medium related to view restriction to the contents transmitted by the contents transmitting unit to the server device connected by the connection control unit; and a transmission request unit to request transmission of contents to the server device connected by the connection control unit, and the server device comprises: a storing unit to store the connection information; a recording control unit to record the connection information stored in the storing unit on the mobile recording medium loaded on the server device; and a determination unit to determine whether the contents requested to be transmitted by the transmission request unit are restricted to view based on the view restriction information transmitted by the view restriction information transmitting unit, and wherein the content transmitting unit transmits the contents when the determination unit determines that the contents requested to be transmitted by the transmission request unit are not restricted to view.

In this manner, by the connection control unit held by the client terminal device, only when the mobile recording medium on which the connection information to connect the client terminal device to the server device through the wireless network is recorded is loaded on the client terminal device, the client terminal device can be connected to the server device through the wireless network on the basis of the connection information recorded on the mobile recording medium. The connection information can be stored by the storing unit held by the server device, and the connection information stored in the storing unit can be recorded on the loaded mobile recording medium by the recording control unit held by the server device.

More specifically, only when the mobile recording medium on which the connection information is recorded is loaded, the client terminal device can be connected to the server device. When the mobile recording medium on which the connection information is recorded is not loaded on the client terminal device, the client terminal device cannot be connected to the server device. For this reason, the client terminal device can be connected to the server device by a scheme which achieves high security.

The view restriction information transmitting unit held by the client terminal device can transmit view restriction information recorded on the mobile recording medium and related to view restriction to contents transmitted by the contents transmitting unit held by the server device to the server device connected by the connection control unit. The transmission request unit held by the client terminal device performs transmission request of the contents to the server device connected by the connection control unit, and the determination unit held by the server device can determine, on the basis of the view restriction information transmitted by the parental restriction information transmitting unit, whether contents requested to be transmitted by the transmission request unit are contents which are restricted to view. The contents transmitting unit held by the server device can transmit the contents when the determination unit determines that the contents requested to be transmitted by the transmission request unit are not contents which are restricted to view.

More specifically, since the server device do not transmit the contents which are restricted to view, it is advantageous to a user that contents which are restricted to view (for example, contents or the like including many educationally inappropriate scenes) are not output.

According to a second aspect of the invention, a client-server system comprises: a server device including a contents transmitting unit to transmit contents; and a client terminal device which is connected to the server device through a wireless network, including: a content receiving unit to receive the contents transmitted by the contents transmitting unit; and an output control unit to output the contents received by the contents receiving unit to an output unit, wherein the server device comprises: a storing unit to store connection information to connect the client terminal device to the server device through the wireless network; and a recording control unit to record the connection information stored in the storing unit on the mobile recording medium loaded on the server device, and the client terminal device comprises: a connection control unit to connect the client terminal device to the server device through the wireless network based on the connection information recorded on the mobile recording medium on which the connection information is recorded by the recording control unit, only when the mobile recording medium is loaded on the client terminal device.

In this manner, the storing unit held by the server device can store the connection information to connect the client terminal device to the server device through the wireless network, and the recording control unit held by the server device records the connection information stored in the storing unit on the loaded mobile recording medium. Only when the connection control unit held by the client terminal device loads the mobile recording medium on which the connection information is recorded by the recording control unit, the client terminal device can be connected to the server device through the wireless network on the basis of the connection information recorded on the mobile recording medium.

More specifically, only when the mobile recording medium on which the connection information is recorded is loaded, the client terminal device can be connected to the server device. When the mobile recording medium on which the connection information is recorded is not loaded, the client terminal device cannot be connected to the server device. Therefore, the client terminal device can be connected to the server device by a scheme having higher security.

Preferably, view restriction information related to view restriction to the contents transmitted by the contents transmitting unit is recorded on the mobile recording medium. Further, the client terminal device preferably comprises: a view restriction information transmitting unit to transmit the view restriction information recorded on the mobile recording medium to the server device connected by the connection control unit; and a transmission request unit to request transmission of contents to the server device connected by the connection control unit, and the server device comprises: a determination unit to determine whether the contents requested to be transmitted by the transmission request unit are restricted to view based on the view restriction information transmitted by the view restriction information transmitting unit, and the contents transmitting unit transmits the contents when the determination unit determines that the contents requested to be transmitted by the transmission request unit are not restricted to view.

In this manner, the view restriction information related to view restriction to the contents transmitted by the contents transmitting unit held by the server device is recorded on the mobile recording medium, and the view restriction information transmitting unit held by the client terminal device can transmit the view restriction information recorded on the mobile recording medium to the server device connected by the connection control unit. The transmission request unit held by the client terminal device can request the server device connected by the connection control unit to transmit the contents, and the determination unit held by the server device can determine, on the basis of the view restriction information transmitted by the view restriction information transmitting unit, whether the contents requested to be transmitted by the transmission request unit are contents which are restricted to view. When the determination unit determines that the contents requested to be transmitted by the transmission request unit are not contents which are restricted to view, the contents transmitting unit held by the server device can transmit the contents.

More specifically, since the server device do not transmit the contents which are restricted to view, it is advantageous to a user that contents which are restricted to view (for example, contents or the like including many educationally inappropriate scenes) are not output.

Preferably, view restriction information related to view restriction to the contents transmitted by the contents transmitting unit is recorded on the mobile recording medium. Further, the client terminal device preferably comprises: a determination unit to determine whether the contents transmitted by the contents transmitting unit are restricted to view based on the view restriction information recorded on the mobile recording medium, and the output control unit outputs the contents to the output unit when the determination unit determines that the contents transmitted by the contents transmitting unit are not restricted to view.

In this manner, the view restriction information related to view restriction to the contents transmitted by the contents transmitting unit held by the server device is recorded on the mobile recording medium, and the determination unit held by the client terminal device can determine, on the basis of the view restriction information recorded on the mobile recording medium, whether the contents transmitted by the contents transmitting unit are contents which are restricted to view. When the output control unit held by the client terminal device can output the contents to an output unit when the determination unit determines that the contents transmitted by the contents transmitting unit are not contents which are restricted to view.

More specifically, it is advantageous to a user that contents which are restricted to view (for example, contents or the like including many educationally inappropriate scenes) are not output.

### BRIEF DESCRIPTION OF THE DRAWINGS

The present invention will become more fully understood from the detailed description given hereinbelow and the appended drawings which given by way of illustration only, and thus are not intended as a definition of the limits of the present invention, and wherein;
FIG. 1 is a block diagram showing a functional configuration of a client-server system according to a first embodiment.
FIG. 2 is a flow chart for explaining processes related to storage of a parental level of a server device performed by the client-server system according to the first embodiment.
FIG. 3 is a flow chart for explaining processes related to an output of contents of the client terminal device performed by the client-server system according to the first embodiment.
FIG. 4 is a block diagram showing a functional configuration of the client-server system according to a second embodiment.
FIG. 5 is a flow chart for explaining processes related to an output of contents of the client terminal device performed by the client-server system according to the first embodiment.

### DETAILED DESCRIPTION OF PREFERRED EMBODIMENTS

Embodiments of a client-server system according to the present invention will be described below with reference to the accompanying drawings. The scope of the invention are not limited to examples shown in the drawings.

### [First Embodiment]

A client-server system 1 according to a first embodiment will be described below.

### <Configuration of Client-server System>

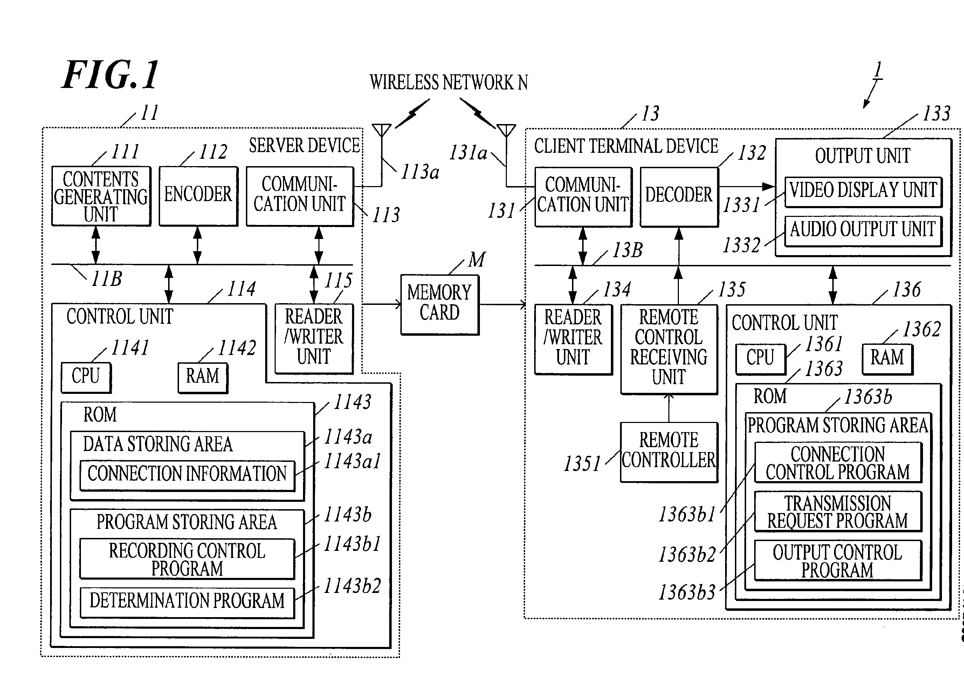

A configuration of the client-server system 1 will be described below with reference to FIG. 1.

The client-server system 1 includes a server device 11 and a client terminal device 13 which transmits and receives predetermined communication data when the client-server system 1 is connected to the server device 11 through a wireless network N.

The wireless network N, for example, is a network such as a wireless LAN (Local Area Network) conforming to IEEE (Institute of Electrical and Electronic Engineers) 802.11 standards.

More specifically, communication data such as contents is transmitted from the server device 11 to the client terminal device 13 through the wireless network N.

For example, communication data such as a level of parental lock serving as view restriction information related to view restriction to the contents transmitted by the server device 11 is transmitted from the client terminal device 13 to the server device 11 through the wireless network N.

In this case, the parental level is expressed as, for example, "level 1" to "level 8".

More specifically, for example, when the parental level is "level 1", contents having "level 1" as a contents level (will be described later) are allowed to be watched, watching of contents having "level 2" to "level 8" as contents levels is restricted.

For example, when the parental level is "level 5", contents having "level 1" to "level 5" as contents levels are allowed to be watched, and watching of contents having "level 6" to "level 8" as contents levels is restricted.

For example, when the parental level is "level 8", contents having "level 1" to "level 8" as contents levels can be watched.

The server device 11 and the client terminal device 13 which are arranged in the client-server system 1 are designed to be able to exchange predetermined data by a memory card M serving as a mobile recording medium.

The memory card M is, for example, a card-type semiconductor memory.

More specifically for the memory card M, data such as connection information 1143a1 is recorded on the server device 11, and the data such as the recorded connection information 1143a1 is read by the client terminal device 13.

In this case, the connection information 1143a1 is, for example, information including an identifier to identify the wireless network N, an encryption key to encrypt/decrypt communication data or the like, and the like.

On the memory card M, for example, data such as a parental level is recorded in advance. The data such as the recorded parental level is read in the client terminal device 13.

### (Configuration of Server Device)

The server device 11, for example, as shown in FIG. 1, includes a contents generating section 111, an encoder 112, a communication section 113, a control section 114, a reader/writer section 115, and the like. The respective sections are connected to each other through a bus 11B.

An insertion hole (not shown) to insert the memory card M thereinto is formed in an outer surface of the server device 11. The memory card M is inserted into the insertion hole to load the memory card M on the server device 11.

The contents generating section 111, for example, is a preferable arbitrary device such as a television set, a video recorder, a PVR (Personal Video Recorder), a tuner for BS (Broadcasting Satellite) broadcast or CS (Communication Satellite) broadcast, an STB (Set Top Box), a DVD (Digital Versatile Disk) player, and an audio set which can generate contents.

More specifically, the contents generating section 111 generates contents according to designation from, for example, the control section 114.

In this case, the contents generated by the contents generating section 111 include video data, audio data, and the like. A contents level determined on the basis of a predetermined reference (for example, the age of a viewer or the like) is added to the contents.

In this case, the contents level is expressed as, for example, "level 1" to "level 8" like a parental level recorded on the memory card M.

For example, contents added with a higher contents level includes many scenes such as violent scenes which are educationally inappropriate.

The encoder 112, for example, encodes contents generated by the contents generating section 111 according to a designation from the control section 114 to output the encoded contents to the communication section 113.

More specifically, the encoder 112 compresses, for example, contents and encrypts the contents on the basis of an encryption key included in the connection information 1143a1 stored in a data storing area 1143a (will be described later) held by a ROM 1143 (will be described later) of the control section 114.

The encoder 112 separately extracts a contents level added to the contents generated by the contents generating section 111 according to a designation from the control section 114 to output the contents level to the control section 114.

The communication section 113 transmits or receives predetermined communication data to or from the client terminal device 13 through the wireless network N. More specifically, the communication section 113 includes an antenna 113a to transmit or receive a radio signal to or from the client terminal device 13, an RF (Radio Frequency) converter (not shown), a wireless LAN card (not shown) to connect the communication section 113 to a wireless LAN conforming to Bluetooth standards or IEEE802.11 standards, and the like.

More specifically, the communication section 113 and the antenna 113a serve as contents transmitting units according to, for example, a designation from the control section 114 to transmit the contents generated by the contents generating section 111 and encoded by the encoder 112 to the client terminal device 13.

More specifically, for example, when contents requested to be transmitted by a CPU 1361 (will be described later) which executes a transmission request program 1363b2 of the client terminal device 13 by, for example, a CPU 1141 (will be described later) which executes a determination program 1143b2 are determined as contents which are not parentally restricted the communication section 113 and, the antenna 113a transmits the contents through the wireless network N identified by an identifier included in the connection information 1143a1 stored in the data storing area 1143a (will be described later) held by the ROM 1143 (will be described later) of the control section 114.

The antenna 113a and the communication section 113 receive the parental level transmitted by, for example, the client terminal device 13.

The control section 114, for example, as shown in FIG. 1, includes the CPU (Central Processing Unit) 1141, a RAM (Random Access Memory) 1142, the ROM (Read Only Memory) 1143, and the like.

The CPU 1141 performs various control operations according to various processing programs for the server device 11 stored in the ROM 1143.

The RAM 1142 includes a program storing area to develop a processing program or the like executed by the CPU 1141, a data storing area to store a processing result or the like obtained when input data or the processing program is executed, and the like.

The RAM 1142 stores a parental level transmitted by, for example, the client terminal device 13 and received by the antenna 113a and the communication section 113.

The ROM 1143 stores a system program which can be executed by the server device 11, various processing programs which can be executed by the system program, data used when the various processing programs are executed, data of a processing result arithmetically processed by the CPU 1141, and the like. The programs are stored in the ROM 1143 in the form of a computer readable program code.

More specifically, the ROM 1143, for example, as shown in FIG. 1, has the data storing area 1143a, the program storing area 1143b, and the like.

The data storing area 1143a serves as, for example, a storing unit to store the connection information 1143a1 or the like to connect the client terminal device 13 to the server device 11 through the wireless network N.

The program storing area 1143b stores, for example, the recording control program 1143b1, the determination program 1143b2, and the like.

The recording control program 1143b1 causes the CPU 1141 to realize a function that records the connection information 1143a1 stored in the data storing area 1143a held by the ROM 1143 on the memory card M loaded on the server device 11 through the reader/writer section 115 (will be described later).

The CPU 1141 functions as a recording control unit by executing the recording control program 1143b1.

The determination program 1143b2 causes the CPU 1141 to realize a function that determines whether the contents requested to be transmitted by the CPU 1361 (will be described later) which executes the transmission request program 1363b2 of the client terminal device 13 on the basis of a parental level transmitted by a communication section 131 (will be described later) and an antenna 131a (will be described later) of, for example, the client terminal device 13 are contents which are parentally restricted.

More specifically, the CPU 1141 compares the parental level transmitted by the client terminal device 13 and stored in the RAM 1142 with the contents level added to the contents generated by the contents generating section 111 and separately extracted by the encoder 112 to determine whether the contents generated by the contents generating section 111 are contents parentally restricted.

More specifically, the CPU 1141 determines that the contents added with the contents level is added are the contents parentally restricted when the contents level exceeds the parental level. When the contents level is equal to or less than the parental level, the CPU 1141 determines that the contents added with the contents level are not the contents parentally restricted.

The CPU 1141 executes the determination program 1143b2 to function as a determination unit.

The reader/writer section 115 reads the predetermined data recorded on the memory card M loaded on the server device 11 according to, for example, a designation from the control section 114 or records the predetermined data on the loaded memory card M.

More specifically, the reader/writer section 115 records the connection information 1143a1 stored in the data storing area 1143a held by the ROM 1143 on the memory card M loaded on the server device 11 according to, for example, a designation from the CPU 1141 which executes the recording control program 1143b1.

### (Configuration of Client Terminal Device)

The client terminal device 13, for example, as shown in FIG. 1, includes the communication section 131, a decoder 132, a reader/writer section 134, a remote control receiving section 135, a control section 136, and the like. The respective sections are connected to each other by a bus 13B.

The client terminal device 13 includes an output section 133 serving as an output unit connected to the decoder 132.

The client terminal device 13 includes a remote controller 1351 for the client terminal device 13 which can communicate with the remote control receiving section 135.

An insertion hole (not shown) into which the memory card M is inserted is formed in an outer surface of the client terminal device 13. The memory card M is inserted from the insertion hole to load the memory card M on the client terminal device 13.

The communication section 131 transmits or receives predetermined communication data to or from the server device 11 through the wireless network N. More specifically, the communication section 131 includes the antenna 131a to transmit or receive a radio signal to or from the server device 11, an RF (Radio Frequency) converter (not shown), a wireless LAN card (not shown) to connect the communication section 131 to a wireless LAN conforming to Bluetooth standards or IEEE802.11 standards, and the like.

More specifically, the antenna 131a and the communication section 131 serves as, for example, a contents receiving unit, to receive the contents transmitted by the communication section 113 and the antenna 113a of the server device 11 and to output the contents to the decoder 132.

The communication section 131 and the antenna 131a serve as view restriction information transmitting units according to, for example, a designation from the control section 136 to transmit the parental level recorded on the memory card M to the server device 11 connected by the CPU 1361 (will be described later) which executes the connection control program 1363b1.

The decoder 132 decodes the contents received by the antenna 131a and the communication section 131 and outputs the contents to the output section 133 according to, for example, a designation from the control section 136 (more specifically, the CPU 1361 (will be described later) which executes the output control program 1363b3).

More specifically, the decoder 132 decodes, for example, contents and decrypts the contents on the basis of an encryption key included in the connection information 1143a1 recorded on the memory card M read by the reader/writer section 134 (will be described later).

The output section 133, for example, as shown in FIG. 1, includes a video display section 1331, an audio output section 1332, and the like.

The video display section 1331 includes, for example, a display screen (not shown) of a liquid crystal type to output a video image on the basis of video data included in the contents output from the decoder 132.

The audio output section 1332 includes, for example a loudspeaker (not shown) to output sound on the basis of audio data included in the contents output from the decoder 132.

The reader/writer section 134 reads the predetermined data recorded on the memory card M loaded on the client terminal device 13 and records the predetermined data on the loaded memory card M according to, for example, a designation from the control section 136.

More specifically, the reader/writer section 134 reads the parental level recorded in advance, the connection information 1143a1 or the like recorded by the reader/writer section 115 of the server device 11, and the like from the memory card M loaded on the client terminal device 13 to output the information and the like to the control section 136.

The remote control receiving section 135 receives various signals transmitted from, for example, the remote controller 1351 and outputs various pieces of information based on the various signal to the control section 136.

The remote controller 1351 is operated by, for example, a user to transmit a signal used for the operation to the remote control receiving section 135.

The control section 136, as shown in FIG. 1, includes the CPU 1361, a RAM 1362, a ROM 1363, and the like.

The CPU 1361 performs various control operations according to various processing programs for the client terminal device 13 stored in the ROM 1363.

The RAM 1362 includes a program storing area to develop a processing program or the like executed by the CPU 1361, a data storing area which stores input data and a processing result obtained when the processing program is executed, and the like.

The ROM 1363 stores a system program which can be executed by the client terminal device 13, various processing programs which can be executed by the system program, data used when the various processing programs are executed, data of a processing result arithmetically processed by the CPU 1361, and the like. The programs are stored in the ROM 1363 in the form of a computer readable program code.

More specifically, the ROM 1363, for example, as shown in FIG. 1, has a program storing area 1363b which stores the connection control program 1363b1 or the like, the transmission request program 1363b2, the output control program 1363b3, and the like.

The connection control program 1363b1 causes the CPU 1361 to realize a function that connects the client terminal device 13 through the server device 11 and the wireless network N on the basis of the connection information 1143a1 recorded on the memory card M only when the memory card M on which the connection information 1143a1 is recorded by the CPU 1141 which executes the recording control program 1143b1 of the server device 11 is loaded on the client terminal device 13.

More specifically, the CPU 1361 reads the connection information 1143a1 recorded on the memory card M loaded on the client terminal device 13 through the reader/writer section 134 to connect the client terminal device 13 to the server device 11 connected to the wireless network N identified by the identifier included in the read connection information 1143a1.

The CPU 1361 executes the connection control program 1363b1 to function as a connection control unit.

The transmission request program 1363b2 causes the CPU 1361 to realize a function that performs transmission request of contents to the server device 11 connected by the CPU 1361 which executes, for example, the connection control program 1363b1.

More specifically, for example, when the CPU 1361 is designated to output contents to the output section 133 by an operation of the remote controller 1351 by a user, the CPU 1361 performs transmission request of the contents.

The CPU 1361 executes the transmission request program 1363b2 to function as a transmission request unit.

The output control program 1363b3 causes the CPU 1361 to realize a function that outputs contents received by, for example, the antenna 131a and the communication section 131 and decoded by the decoder 132 to the output section 133.

The CPU 1361 executes the output control program 1363b3 to function as an output control unit.

### <Process Performed by Client-server System>

Processes performed by the client-server system 1 will be described below.

### (Parental Level Storing Process)

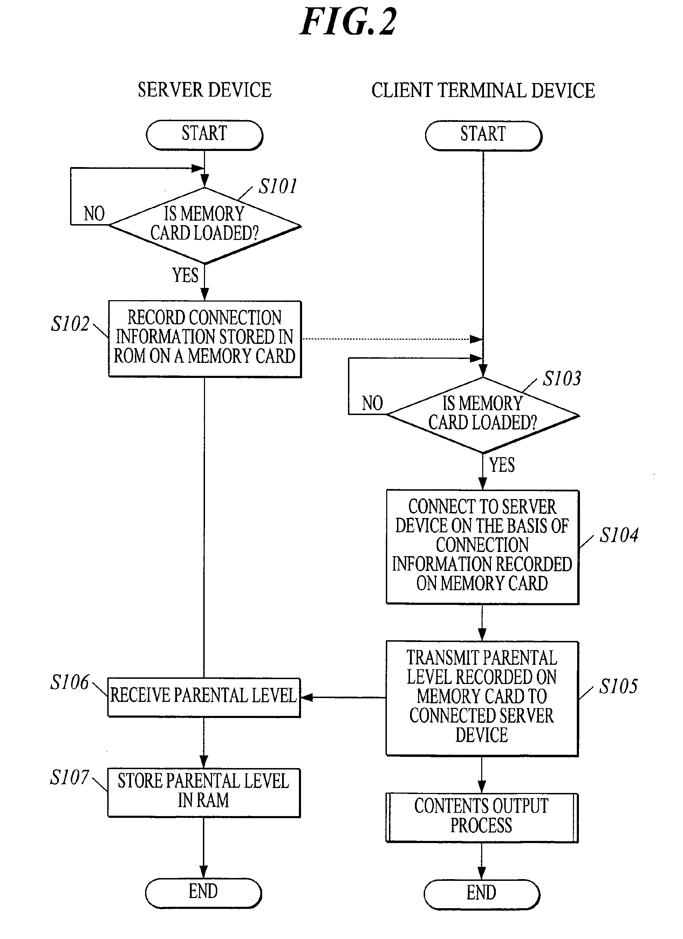

First, a process related to storage of a parental level of the server device 11 performed by the client-server system 1 will be described below with reference to a flow chart in FIG. 2.

The CPU 1141 of the server device 11 determines whether the memory card M is loaded on the server device 11 (step S101).

When it is determined in step S101 that the memory card M is not loaded on the server device 11 (step S101; No), the CPU 1141 repeats the process in step S101.

On the other hand, when it is determined in step S101 that the memory card M is loaded on the server device 11 (step S101; Yes), the CPU 1141 executes the recording control program 1143b1 to record the connection information 1143a1 stored in the data storing area 1143a held by the ROM 1143 on the loaded memory card M through the reader/writer section 115 (step S102).

The CPU 1361 of the client terminal device 13 determines whether the memory card M is loaded on the client terminal device 13 (step S103).

When it is determined in step S103 that the memory card M is not loaded on the client terminal device 13 (step S103; No), the CPU 1361 repeats the process in step S103.

On the other hand, when it is determined in step S103 that the memory card M is loaded on the client terminal device 13 (step S103; Yes), the CPU 1361 executes the connection control program 1363b1 to read the connection information 1143a1 recorded on the loaded memory card M through the reader/writer section 134, and the client terminal device 13 is connected to the server device 11 through the wireless network N on the basis of the read connection information 1143a1 (step S104).

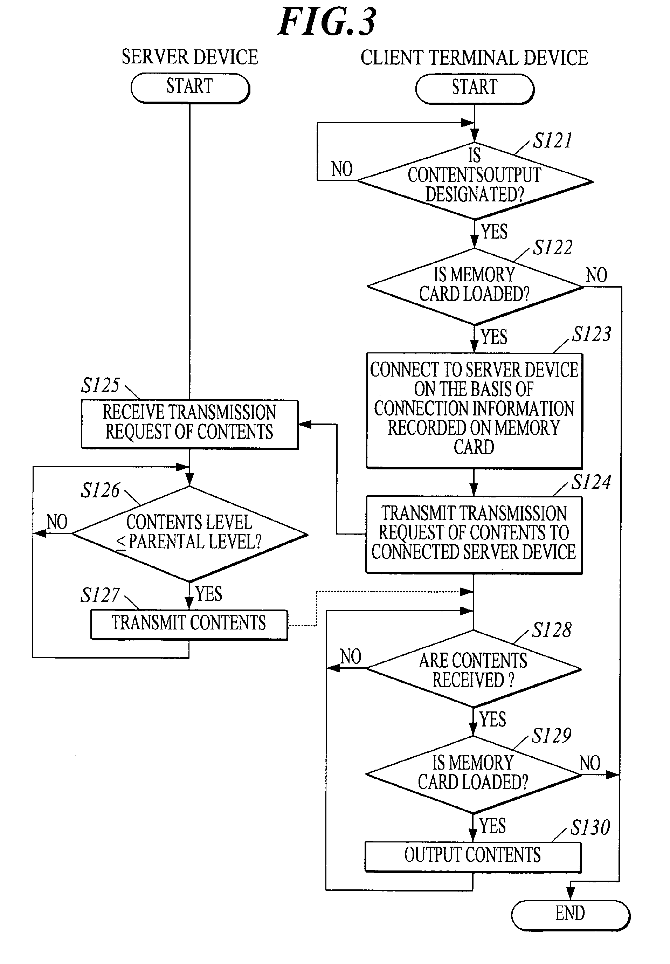

The CPU 1361 transmits the parental level recorded on the memory card M loaded on the client terminal device 13 to the server device 11 connected in step S104 through the communication section 131 and the antenna 131a (step S105) and shifts to the contents output process (FIG. 3) (will be described later) to end this process.

When the antenna 113a and the communication section 113 receive the parental level transmitted in step S105 (step S106), the CPU 1141 of the server device 11 stores the received parental level in the RAM 1142 (step S107) to end the process.

### (Contents Output Process)

A process related to an output of contents of the client terminal device 13 performed by the client-server system 1 will be described below with reference to a flow chart in FIG. 3.

The CPU 1361 of the client terminal device 13 executes the transmission request program 1363b2 to determine whether an operation of the remote controller 1351 by a user designates to output the contents to the output section 133 (step S121).

It is determined in step S121 that the contents are not designated to be output (step S121; No), the CPU 1361 repeats the process in step S121.

On the other hand, when it is determined in step S121 that the contents are designated to be output (step S121; Yes), the CPU 1361 determines whether the memory card M is loaded on the client terminal device 13 (step S122).

It is determined in step S122 that the memory card M is not loaded on the client terminal device 13 (step S122; No), the CPU 1361 ends the process.

On the other hand, when it is determined in step S122 that the memory card M is loaded on the client terminal device 13 (step S122; Yes), the CPU 1361 executes the connection control program 1363b1 to connect the client terminal device 13 to the server device 11 through the wireless network N on the basis of the connection information 1143a1 recorded on the loaded memory card M (step S123).

The CPU 1361 executes the transmission request program 1363b2 to transmit a transmission request of contents to the server device 11 connected in step S123 through the communication section 131 and the antenna 131a according to the designation made in step S121 (step S124).

When the antenna 113a and the communication section 113 receive the transmission request of the contents transmitted in step S124 (step S125), the CPU 1141 of the server device 11 executes the determination program 1143b2 to compare the contents level added to the contents generated by the contents generating section 111 with the parental level stored in the RAM 1142 in step S107 of the parental level storing process (FIG. 2), so as to determine whether the contents level is equal to or lower than the parental level (step S126).

More specifically, when the parental level stored in the RAM 1142 is "level 5", it is determined whether the contents level is "level 1" to "level 5".

When it is determined in step S126 that the contents level is not equal to or lower than the parental level (step S126; No), i.e., when it is determined that the contents generated by the contents generating section 111 are contents which are parentally restricted, the CPU 1141 repeats the process in step S126.

On the other hand, when it is determined in step S126 that the contents level is equal to or less than the parental level (step S126; Yes), i.e., when it is determined the contents generated by the contents generating section 111 is not the contents parentally restricted, the CPU 1141 transmits the contents to the client terminal device 13 through the communication section 113 and the antenna 113a (step S127) to repeat the processes subsequent to step S126.

The contents transmitted in step S127 are compressed by the encoder 112 and encrypted on the basis of an encryption key included in the connection information 1143a1 stored in the data storing area 1143a held by the ROM 1143 of the server device 11.

The CPU 1361 of the client terminal device 13 determines whether the antenna 131a and the communication section 131 receive the contents from the server device 11 (step S128).

When it is determined in step S128 that the contents are not received (step S128; No), the CPU 1361 repeats the process in step S128.

On the other hand, when it is determined in step S128 that the contents are received (step S128; Yes), the CPU 1361 determines whether the memory card M is loaded on the client terminal device 13 (step S129).

When it is determined in step S129 that the memory card M is not loaded on the client terminal device 13 (step S129; No), the CPU 1361 ends the process.

On the other hand, when it is determined in step S129 that the memory card M is loaded on the client terminal device 13 (step S129; Yes), the CPU 1361 executes the output control program 1363b3 and designates the decoder 132 to output the contents received in step S128 to the output section 133 (step S130), and the CPU 1361 repeats the processes subsequent to step S128.

The contents transmitted in step S130 are decoded by the decoder 132 and encrypted on the basis of the encryption key included in the connection information 1143a1 recorded on the memory card M loaded on the client terminal device 13.

According to the client-server system 1 of the first embodiment described above, the CPU 1361 which executes the connection control program 1363b1 held by the client terminal device 13 can connect the client terminal device 13 to the server device 11 through the wireless network N on the basis of the connection information 1143a1 recorded on the memory card M only when the memory card M on which the connection information 1143a1 to connect the client terminal device 13 to the server device 11 through the wireless network N is loaded. The data storing area 1143a held by the ROM 1143 held by the server device 11 can store the connection information 1143a1. The CPU 1141 which executes the recording control program 1143b1 held by the server device 11 can record the connection information 1143a1 stored in the data storing area 1143a held by the ROM 1143 on the memory card M.

More specifically, only when the memory card M on which the connection information 1143a1 is recorded is loaded, the client terminal device 13 can be connected to the server device 11. When the memory card M on which the connection information 1143a1 is recorded is not loaded, the client terminal device 13 cannot be connected to the server device 11. For this reason, the client terminal device 13 can be connected to the server device 11 by a scheme having high security.

The communication section 131 and the antenna 131a which are held by the client terminal device 13 can transmit a parental level recorded on the memory card M and related to parental restriction to contents transmitted by the communication section 113 and the antenna 113a which are held by the server device 11 to the server device 11 connected by the CPU 1361 which executes the connection control program 1363b1. The CPU 1361 which executes the transmission request program 1363b2 held by the client terminal device 13 can perform transmission request of the contents to the server device 11 connected by the CPU 1361 which executes the connection control program 1363b1. The CPU 1141 which executes the determination program 1143b2 held by the server device 11 can determine whether the contents requested to be transmitted by the CPU 1361 which executes a transmission request program 1363a2 are contents parentally restricted on the basis of a parental level transmitted by the communication section 131 and the antenna 131a of the client terminal device 13. The communication section 113 and the antenna 113a which are held by the server device 11 can transmit the contents when the contents requested to be transmitted by the CPU 1361 which executes the transmission request program 1363b2 by the CPU 1141 which executes the determination program 1143b2 are not the contents parentally restricted.

More specifically, since the server device 11 do not transmit the contents parentally restricted, it is advantageous to a user that the contents which are parentally restricted (for example, contents or the like including many educationally inappropriate scenes) are not output.

### [Second Embodiment]

A client-server system 2 according to a second embodiment will be described below.

### <Configuration of Client-server System>

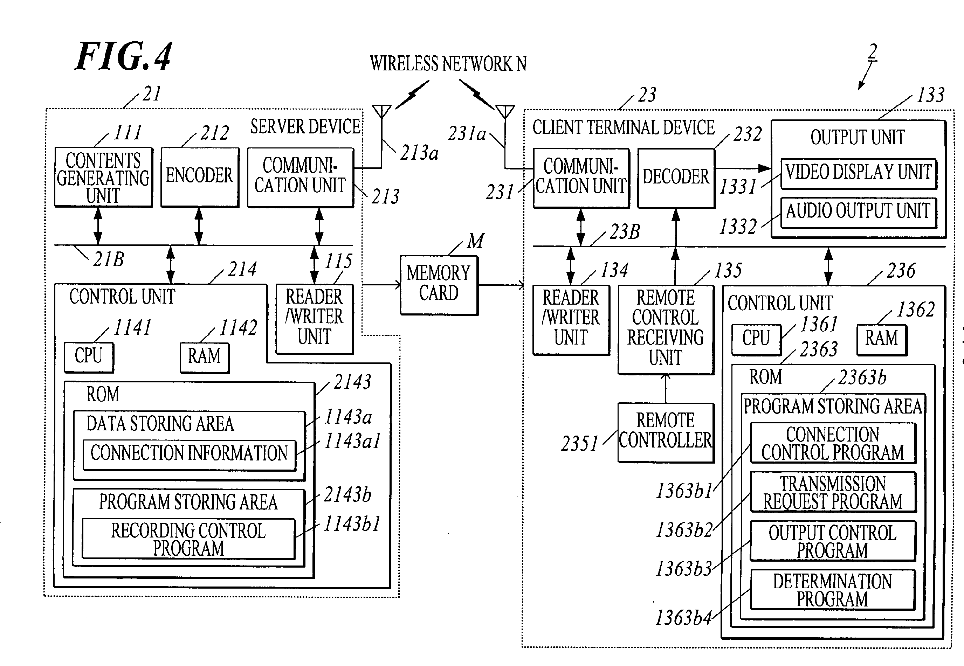

First, a configuration of the client-server system 2 will be described below with reference to FIG. 4.

The client-server system 2 according to the second embodiment is different from the client-server system 1 (FIG. 1) according to the first embodiment in only the step of determining whether contents are parentally restricted contents. More specifically, in the server device 11 (FIG. 1), a part of the configuration of the encoder 112, a part of the configuration of the communication section 113, and a part of the configuration of the control section 114 are different from those of the client-server system 2. In the client terminal device 13 (FIG. 1), a part of the configuration of the communication section 131, a part of the configuration of the decoder 132, and a part of the configuration of the control section 136 are different from those of the client-server system 2. Therefore, only the different parts will be described below. The other common parts will be described while being added with the same numerals as in the first embodiment.

The client-server system 2 includes a server device 21 and a client terminal device 23 which transmits or receives predetermined communication data when the client terminal device 23 is connected to the server device 21 through a wireless network N.

More specifically, communication data such as contents is transmitted from the server device 21 to the client terminal device 23 through the wireless network N.

The server device 21 and the client terminal device 23 which are arranged in the client-server system 2 are designed to exchange predetermined data through a memory card M.

More specifically, data such as connection information 1143a1 is recorded on the memory card M in, for example, the server device 21, and the data such as the recorded connection information 1143a1 is read in the client terminal device 23.

Data such as a parental level is recorded on the memory card M in advance. The data such as the recorded parental level is read in the client terminal device 23.

### (Configuration of Server Device)

The server device 21, for example, as shown in FIG. 4, includes a contents generating section 111, an encoder 212, a communication section 213, a control section 214, a reader/writer section 115, and the like. The respective sections are connected by a bus 21B.

An insertion hole (not shown) to insert the memory card M thereinto is arranged in an outer surface of the server device 21. The memory card M is inserted into the insertion hole to load the memory card M on the server device 21.

The encoder 212 encodes contents generated by the contents generating section 111 according to a designation from, for example, the control section 214 to output the encoded contents to the communication section 213.

More specifically, the encoder 212 compresses, for example, contents (contents added with a contents level) and encrypts the contents on the basis of an encryption key included in the connection information 1143a1 stored in a data storing area 1143a held by a ROM 2143 (will be described later) of the control section 214.

The communication section 213 transmits or receives predetermined communication data to or from the client terminal device 23 through the wireless network N. More specifically, the communication section 213 includes an antenna 213a to transmit or receive a radio signal to or from the client terminal device 23, an RF (Radio Frequency) converter (not shown), a wireless LAN card (not shown) to connect the communication section 213 to a wireless LAN conforming to Bluetooth standards or IEEE802.11 standards, and the like.

More specifically, the communication section 213 and the antenna 213a serve as contents transmitting units according to, for example, a designation from the control section 214 to transmit the contents generated by the contents generating section 111 and encoded by the encoder 212 to the client terminal device 23.

More specifically, the communication section 213 and the antenna 213a transmit contents (contents added with a contents level) to the client terminal device 23 through the wireless network N identified by an identifier included in the connection information 1143a1 stored in the data storing area 1143a held by a ROM 2143 (will be described later) of, for example, the control section 214.

The control section 214, for example, as shown in FIG. 4, includes a CPU 1141, a RAM 1142, the ROM 2143, and the like.

The ROM 2143 stores a system program which can be executed by the server device 21, various process program which can be executed by the system program, data used when the various processing programs are executed, data of a processing result arithmetically processed by the CPU 1141, and the like. The programs are stored in the ROM 2143 in the form of a computer readable program code.

More specifically, the ROM 2143, for example, as shown in FIG. 1, has a data storing area 1143a in which the connection information 1143a1 or the like is stored, a program storing area 2143b in which a recording control program 1143b1 or the like is stored, and the like.

### (Configuration of Client Terminal Device)

The client terminal device 23, for example, as shown in FIG. 4, includes the communication section 213, a decoder 232, a reader/writer section 134, a remote control receiving section 135, a control section 236, and the like. The respective sections are connected to each other by a bus 23B.

The client terminal device 23 includes an output section 133 connected to the decoder 232.

The client terminal device 23 includes a remote controller 2351, which can communicate with the remote control receiving section 135, for the client terminal device 23.

An insertion hole (not shown) to insert the memory card M thereinto is arranged in an outer surface of the server device 23. The memory card M is inserted into the insertion hole to load the memory card M on the server device 23.

The communication section 231 transmits or receives predetermined communication data to or from the server device 21 through the wireless network N. More specifically, the communication section 231 includes the antenna 231a to transmit or receive a radio signal to or from the server device 21, an RF (Radio Frequency) converter (not shown), a wireless LAN card (not shown) to connect the communication section 231 to a wireless LAN conforming to Bluetooth standards or IEEE802.11 standards, and the like.

More specifically, the antenna 231a and the communication section 231 serves as, for example, a contents receiving unit, to receive the contents (contents added with a contents level) transmitted by the communication section 213 and the antenna 213a of the server device 21 and to output the contents to the decoder 232.

The decoder 232 decodes the contents received by the antenna 231a and the communication section 231 according to a designation from the control section 236 (i.e., the CPU 1361 which executes the output control program 2363b3) to output the decoded contents to the output section 133.

More specifically, the decoder 232 decodes, for example, the contents (contents added with a contents level) and decrypts the contents on the basis of an encryption key included in the connection information 1143a1 recorded on the memory card M read by the reader/writer section 134. The decoder 232 separately extracts, for example, the contents level added to the contents from the contents to output the contents level to the control section 214 and to output the contents to the output section 133.

The control section 236, as shown in FIG. 2, includes the CPU 1361, a RAM 1362, a ROM 2363, and the like.

The ROM 2363 stores a system program which can be executed by the client terminal device 23, various processing programs which can be executed by the system program, data used when the various processing programs are executed, data of a processing result arithmetically processed by the CPU 1361, and the like. The programs are stored in the ROM 2363 in the form of a computer readable program code.

More specifically, the ROM 2363, for example, as shown in FIG. 4, has a program storing area 2363b which stores the connection control program 1363b1, a transmission request program 1363b2, the output control program 2363b3, a determination program 2363b4, and the like.

The output control program 2363b3 causes the CPU 1361 to realize a function that outputs contents received by, for example, the antenna 231a and the communication section 231 and decoded by the decoder 232 to the output section 133.

More specifically, the CPU 1361 outputs the contents to the output section 133 when the CPU 1361 (will be described later) which executes a determination program 2363a4 determines that the contents transmitted by the communication section 213 and the antenna 231a of the server device 21 are not contents parentally restricted.

The CPU 1361 executes the output control program 2363b3 to function as an output control unit.

The determination program 2363b4 causes the CPU 1361 to realize a function that determines whether the contents transmitted from the communication section 213 and the antenna 213a of the server device 21 are contents parentally restricted on the basis of, for example, the parental level recorded on the memory card M.

The CPU 1361 executes the determination program 2363b4 to function as a determination unit.

### <Contents Output Process by Client-server System>

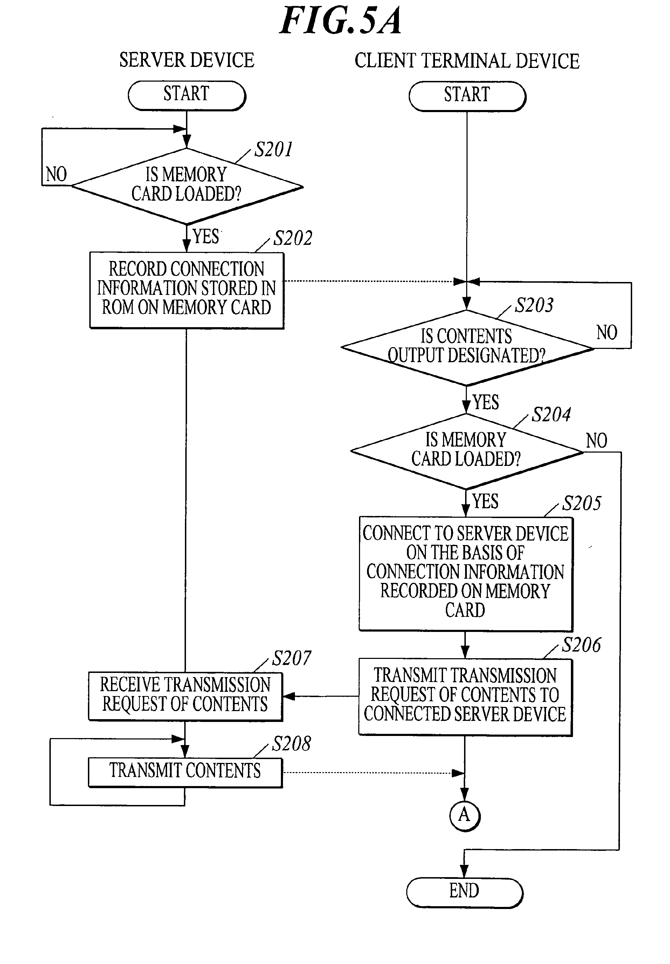

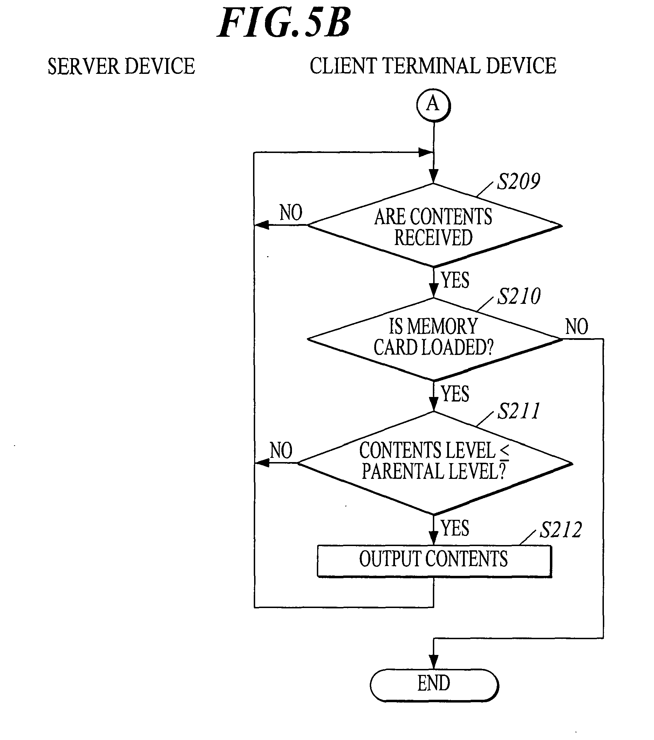

A process related to an output of contents of the client terminal device 23 performed by the client-server system 2 will be described below with reference to a flow chart in FIG. 5.

The CPU 1141 of the server device 21 determines whether the memory card M is loaded on the server device 21 (step S201).

When it is determined in step S201 that the memory card M is not loaded on the server device 21 (step S201; No), the CPU 1141 repeats the process in step S201.

On the other hand, when it is determined in step S201 that the memory card M is loaded on the server device 21 (step S201; Yes), the CPU 1141 executes the recording control program 1143b1 to record the connection information 1143a1 stored in the data storing area 1143a held by the ROM 2143 on the loaded memory card M through the reader/writer section 115 (step S202).

The CPU 1361 of the client terminal device 23 executes the transmission request program 1363b2 to determine whether an operation of the remote controller 2351 by a user designates the output section 133 to output contents (step S203).

When it is determined in step S203 that the contents are not designated to be output (step S203; No), the CPU 1361 repeats the process in step S203.

On the other hand, when it is determined in step S203 that the contents are designated to be output (step S203; Yes), the CPU 1361 determines whether the memory card M is loaded on the client terminal device 23 (step S204).

When it is determined in step S204 that the memory card M is not loaded on the client terminal device 23 (step S204; No), the CPU 1361 ends the process.

On the other hand, when it is determined in step S204 that the memory card M is loaded on the client terminal device 23 (step S204; Yes), the CPU 1361 executes the connection control program 1363b1 to connect the client terminal device 23 to the server device 21 through the wireless network N on the basis of the connection information 1143a1 recorded on the loaded memory card M (step S205).

The CPU 1361 executes the transmission request program 1363b2 to transmit a transmission request of contents to the server device 21 connected in step S205 through the communication section 231 and the antenna 231a according to the designation made in step S203 (step S206).

When the antenna 213a and the communication section 213 receive the transmission request of the contents transmitted in step S206 (step S207), the CPU 1141 of the server device 21 transmits the contents (contents added with a contents level) generated by the contents generating section 111 to the client terminal device 23 through the communication section 213 and the antenna 213a (step S208), and the CPU 1141 repeats the process in step S208.

The contents (contents added with the contents level) transmitted in step S208 are compressed by the encoder 212 and encrypted on the basis of an encryption key included in the connection information 1143a1 stored in the data storing area 1143a held by the ROM 2143 of the server device 21.

The CPU 1361 of the client terminal device 23 determines whether the antenna 231a and the communication section 231 receive the contents from the server device 21 (step S209).

When it is determined in step S209 that the contents are not received (step S209; No), the CPU 1361 repeats the process in step S209.

On the other hand, when it is determined in step S209 that the contents are received (step S209; Yes), the CPU 1361 determines whether the memory card M is loaded on the client terminal device 23 (step S210).

When it is determined in step S210 that the memory card M is not loaded on the client terminal device 23 (step S209; No), the CPU 1361 ends the process.

On the other hand, when it is determined in step S210 that the memory card M is loaded on the client terminal device 23 (step S209; Yes), the CPU 1361 executes the determination program 2363b4 to compare the contents level of the contents (contents added with the contents level) received in step S209 with the parental level recorded on the memory card M loaded on the client terminal device 23 so as to determine the contents level is equal or less than the parental level (step S211).

When it is determined in step S211 that the contents level is not equal to or lower than the parental level (step S211; No), i.e., when it is determined that the contents transmitted by the server device 21 are contents which are parentally restricted, the CPU 1361 repeats the processes subsequent to step S209.

On the other hand, when it is determined in step S211 that the contents level is equal to or less than the parental level (step S211; Yes), i.e., when it is determined the contents transmitted by the server device 21 is not the contents parentally restricted, the CPU 1361 executes the output control program 2363b3 to designate the decoder 132 to output the contents received in step S209 to the output section 133 (step S212). The CPU 1361 repeats the processes subsequent to step S209.

According to the client-server system 2 of the second embodiment described above, the CPU 1361 which executes the determination program 2363b4 held by the client terminal device 23 can determine whether contents transmitted by the communication section 213 and the antenna 213a of the server device 21 are contents parentally restricted on the basis of a parental level recorded on the memory card M. The CPU 1361 which executes the output control program 2363b3 held by the client terminal device 23 can output the contents to the output section 133 when the contents transmitted by the communication section 213 and the antenna 213a of the server device 21 are not determined as the contents parentally restricted by the CPU 1361 which executes determination program 2363b4.

More specifically, it is advantageous to a user that the contents parentally restricted (for example, contents or the like including many educationally inappropriate scenes) are not output.

The present invention is not limited to the embodiments described above. Changes and modifications of the invention can be effected without departing from the spirit and scope of the invention.

In the first embodiment, one client terminal device 13 is connected to one server device 11. However, the invention is not limited to the first embodiment. A plurality of client terminal devices 13 may be designed to be able to be connected to one server device 11. In this case, a parental level must be stored in the RAM 1142 of the control section 114 of the server device 11 in a state in which the client terminal device 13 which transmits the parental level can be identified.

As in the second embodiment, a plurality of client terminal devices 23 may be designed to be able to be connected to one server device 21.

In the first embodiment, the server device 11 includes the contents generating section 111, i.e., the server device 11 and the contents generating section 111 are integrated with each other. However, the server device 11 may be separated from the contents generating section 111. Similarly, the client terminal device 13 may be separated from the output section 133.

The same applies to the second embodiment.

In the first embodiment, connection information and a parental level are recorded on the memory card M. However, for example, in addition to the connection information and the parental level, contents may be recorded on the memory card M. In this case, the client terminal device 13 must output not only contents transmitted from the server device 11 but also the contents recorded on the memory card M.

The same applies to the second embodiment.

In the first embodiment, the memory card M is used as a mobile recording medium. However, an arbitrary mobile recording medium in which at least connection information can be recorded may be used.

The same applies to the second embodiment.

## Claims

1. A client-server system comprising:
a server device including a contents transmitting unit to transmit contents; and
a client terminal device which is connected to the server device through a wireless network, including: a content receiving unit to receive the contents transmitted by the contents transmitting unit; and an output control unit to output the contents received by the contents receiving unit to an output unit,
wherein the client terminal device comprises:
a connection control unit to connect the client terminal device to the server device through the wireless network based on connection information recorded on a mobile recording medium on which the connection information to connect the client terminal device to the server device through the wireless network is recorded, only when the mobile recording medium is loaded on the client terminal device;
a view restriction information transmitting unit to transmit view restriction information recorded on the mobile recording medium related to view restriction to the contents transmitted by the contents transmitting unit to the server device connected by the connection control unit; and
a transmission request unit to request transmission of contents to the server device connected by the connection control unit, and
the server device comprises:
a storing unit to store the connection information;
a recording control unit to record the connection information stored in the storing unit on the mobile recording medium loaded on the server device; and
a determination unit to determine whether the contents requested to be transmitted by the transmission request unit are restricted to view based on the view restriction information transmitted by the view restriction information transmitting unit, and
wherein the content transmitting unit transmits the contents when the determination unit determines that the contents requested to be transmitted by the transmission request unit are not restricted to view.

2. A client-server system comprising:
a server device including a contents transmitting unit to transmit contents; and
a client terminal device which is connected to the server device through a wireless network, including: a content receiving unit to receive the contents transmitted by the contents transmitting unit; and an output control unit to output the contents received by the contents receiving unit to an output unit,
wherein the server device comprises:
a storing unit to store connection information to connect the client terminal device to the server device through the wireless network; and
a recording control unit to record the connection information stored in the storing unit on the mobile recording medium loaded on the server device, and the client terminal device comprises:
a connection control unit to connect the client terminal device to the server device through the wireless network based on the connection information recorded on the mobile recording medium on which the connection information is recorded by the recording control unit, only when the mobile recording medium is loaded on the client terminal device.

3. The client-server system according to claim 2,
wherein view restriction information related to view restriction to the contents transmitted by the contents transmitting unit is recorded on the mobile recording medium,
the client terminal device comprises:
a view restriction information transmitting unit to transmit the view restriction information recorded on the mobile recording medium to the server device connected by the connection control unit; and
a transmission request unit to request transmission of contents to the server device connected by the connection control unit,
the server device comprises:
a determination unit to determine whether the contents requested to be transmitted by the transmission request unit are restricted to view based on the view restriction information transmitted by the view restriction information transmitting unit, and
wherein the contents transmitting unit transmits the contents when the determination unit determines that the contents requested to be transmitted by the transmission request unit are not restricted to view.

4. The client-server system according to claim 2,
wherein view restriction information related to view restriction to the contents transmitted by the contents transmitting unit is recorded on the mobile recording medium,
the client terminal device comprises:
a determination unit to determine whether the contents transmitted by the contents transmitting unit are restricted to view based on the view restriction information recorded on the mobile recording medium, and
wherein the output control unit outputs the contents to the output unit when the determination unit determines that the contents transmitted by the contents transmitting unit are not restricted to view.
